# EUROPÄISCHE PATENTSCHRIFT

(11) **EP 3 650 312 B1**
(45) Veröffentlichungstag und Bekanntmachung des Hinweises auf die Patenterteilung: **30.12.2020**
(21) Anmeldenummer: 18204483.4
(22) Anmeldetag: 06.11.2018
(51) Int. Cl.: B62D 3/12, B62D 21/11, B62D 65/02

(54) **ACHSTRÄGER MIT VORRICHTUNG ZUM POSITIONIEREN EINES LENKGETRIEBES**
AXLE SUPPORT WITH DEVICE FOR POSITIONING OF A STEERING GEAR
SUPPORT D'ESSIEU POURVU DE DISPOSITIF DE POSITIONNEMENT D'UN MÉCANISME DE DIRECTION

(43) Veröffentlichungstag der Anmeldung: 13.05.2020
(73) Patentinhaber: Autotech Engineering Deutschland GmbH, 33647 Bielefeld (DE)
(72) Erfinder: Krolo, Mario, 33803 Steinhagen (DE)
(74) Vertreter: Cohausz & Florack

(56) Entgegenhaltungen:
- DE-A1-102005 045 296
- DE-A1-102012 018 559
- JP-A- 2009 040 200
- JP-U- H0 343 077

## Beschreibung

Die Erfindung betrifft einen Achsträger, auch als Hilfrahmen bezeichnet, für ein Kraftfahrzeug, mit mindestens zwei Längsträgern, mindestens einem die Längsträger miteinander verbindenden Querträger, mindestens zwei Anbindungsstellen zum Anbinden eines Lenkgetriebegehäuses an dem Achsträger und einer Vorrichtung zum Positionieren des Lenkgetriebegehäuses an dem Achsträger vor einer Montage des Lenkgetriebegehäuses an dem Achsträger.

Lenkgetriebe für Kraftfahrzeuge werden üblicherweise in Kraftfahrzeughochrichtung (z-Richtung) am Achsträger des betreffenden Kraftfahrzeuges angeschraubt (siehe z. B. US 2011/0062677 A1).

Aus der DE 10 2006 048 946 A1 ist eine Hilfsrahmenanordnung für ein Kraftfahrzeug bekannt, die eine in Fahrzeuglängsrichtung (x-Richtung) ausgerichtete Verschraubung des Lenkgetriebegehäuses am Hilfsrahmen vorsieht.

Aus der DE 10 2012 018 559 A1 ist eine Vorrichtung zum Positionieren und Befestigen eines Lenkgetriebes an einem Kraftfahrzeugaufbau bekannt. Die Vorrichtung umfasst einen am Kraftfahrzeugaufbau gelagerten Hilfsrahmen, Justierstifte, die mit dem Hilfsrahmen derart lösbar verbindbar sind, dass sie im montierten Zustand in Kraftfahrzeuglängsrichtung ausgerichtet sind, und mehrere in Kraftfahrzeuglängsrichtung ausgerichtete Schraubverbindungen, über die das Lenkgetriebe mit dem Hilfsrahmen befestigbar ist, wobei an dem Lenkgetriebe den Justierstiften zugeordnete Kontaktflächen ausgebildet sind, über welche die Position des Lenkgetriebes in Kraftfahrzeughochrichtung und in Kraftfahrzeugquerrichtung festgelegt ist. Der Hilfsrahmen weist hierzu Abstecklöcher auf, in welche die Justierstifte einsteckbar sind. Nach erfolgter Verschraubung des Lenkgetriebes am Hilfsrahmen werden die Justierstifte wieder entfernt. Das Einstecken und spätere Entfernen der Justierstifte erfordert bei der bekannten Vorrichtung einen erheblichen Aufwand. Zudem erscheint die Positionierung des Lenkgetriebes relativ zu dem Hilfsrahmen noch verbesserungsfähig.

Davon ausgehend liegt der vorliegenden Erfindung die Aufgabe zugrunde, einen Achsträger der eingangs genannten Art zu schaffen, der eine kostengünstige und schnelle Positionierung eines Lenkgetriebes bietet.

Diese Aufgabe wird durch einen Achsträger mit den in Anspruch 1 angegebenen Merkmalen gelöst. Bevorzugte und vorteilhafte Ausgestaltungen der Erfindung sind in den Unteransprüchen angegeben.

Der erfindungsgemäße Achsträger umfasst mindestens zwei Längsträger, mindestens einen die Längsträger miteinander verbindenden Querträger, mindestens zwei Anbindungsstellen zum Anbinden eines Lenkgetriebegehäuses an dem Achsträger und eine Vorrichtung zum Positionieren des Lenkgetriebegehäuses an dem Achsträger vor einer Montage des Lenkgetriebegehäuses am Achsträger. Die Vorrichtung zum Positionieren des Lenkgetriebegehäuses weist erfindungsgemäß mindestens zwei Halterungen auf, von denen eine Halterung mit einem der Längsträger und/oder dem Querträger verbunden ist und eine andere der Halterungen mit einem anderen der Längsträger und/oder dem Querträger verbunden ist, wobei die jeweilige Halterung mindestens zwei Vertiefungen zur Aufnahme von an dem Lenkgetriebegehäuse vorgesehenen Positionierungsvorsprüngen aufweist.

Vorzugsweise sind bei dem erfindungsgemäßen Achsträger die Vertiefungen zur Aufnahme der Positionierungsvorsprünge in nach oben weisenden Kanten der Halterungen ausgebildet. Die Vertiefungen können auch als Positionierungslöcher oder Ausklinkungen bezeichnet werden. Die Längsträger und/oder der mindestens eine Querträger des erfindungsgemäßen Achsträger sind vorzugsweise aus Metallblech gefertigt bzw. als rohrförmige Hohlkörper ausgeführt.

Im Vergleich zu der aus der DE 10 2012 018 559 A1 bekannten Vorrichtung erfordert der erfindungsgemäße Achsträger für die Positionierung des Lenkgetriebes keine zusätzlichen Hilfswerkzeuge wie z. B. Justierstifte. Vielmehr lässt sich das Lenkgetriebegehäuse mit den daran vorgesehenen Positionierungsvorsprüngen in die Vertiefungen der Halterungen unmittelbar einlegen, wodurch das Lenkgetriebe sofort relativ zu dem Achsträger positioniert ist. Das Lenkgetriebe bzw. das Lenkgetriebegehäuse ist somit sofort relativ zu dem Achsträger in y-Richtung (Kraftfahrzeugquerrichtung), in x-Richtung (Kraftfahrzeuglängsrichtung) und in z-Richtung (Kraftfahrzeughochrichtung) positioniert. Anschließend kann das Lenkgetriebegehäuse mit Schrauben an dem Achsträger befestigt werden.

Eine vorteilhafte Ausgestaltung der Erfindung ist dadurch gekennzeichnet, dass die Anbindungsstellen zum Anbinden des Lenkgetriebegehäuses in den die Vertiefungen zur Aufnahme der Positionierungsvorsprünge aufweisenden Halterungen angeordnet sind. Diese Ausgestaltung ermöglicht eine Reduzierung von Bauteilen und Fertigungsschritten, wodurch sich der Aufwand für die Herstellung des Achsträgers und dabei auftretende Toleranzen, insbesondere sich aus mehreren Toleranzen ergebenden Toleranzketten, reduzieren lassen.

Für eine schnelle und stabile Positionierung des Lenkgetriebegehäuses relativ zu dem Achsträger ist es günstig, wenn nach einer weiteren bevorzugten Ausgestaltung der Erfindung mindestens eine der Vertiefungen zur Aufnahme eines der Positionierungsvorsprünge eine V-förmige, konkave oder kreisbogenförmige Innenkontur aufweist.

Eine weitere vorteilhafte Ausgestaltung der Erfindung ist dadurch gekennzeichnet, dass mindestens eine der Vertiefungen zur Aufnahme eines der Positionierungsvorsprünge einen geraden Innenkonturabschnitt aufweist, der einen mittleren Abschnitt der Innenkontur der Vertiefung darstellt. Diese Ausgestaltung lässt kleine Toleranzen im Abstand der Positionierungsvorsprünge zueinander in y-Richtung (Kraftfahrzeugquerrichtung) und/oder in z-Richtung (Kraftfahrzeughochrichtung) zu. Vorzugsweise ist diese Ausgestaltung mit der zuvor genannten Ausgestaltung der Erfindung kombiniert, so dass beispielsweise an einem Ende des Lenkgetriebegehäuses mindestens eine der Vertiefungen zur Aufnahme eines der Positionierungsvorsprünge eine V-förmige, konkave oder kreisbogenförmige Innenkontur aufweist, während an dem anderen Ende des Lenkgetriebegehäuses eine oder mehrere der Vertiefungen zur Aufnahme eines der Positionierungsvorsprünge jeweils einen geraden Innenkonturabschnitt aufweisen, der einen mittleren Abschnitt der Innenkontur der Vertiefung darstellt.

Nach einer weiteren Ausgestaltung der Erfindung sind die Anbindungsstellen zum Anbinden des Lenkgetriebegehäuses als Durchgangslöcher in den die Vertiefungen zur Aufnahme der Positionierungsvorsprünge aufweisenden Halterungen ausgeführt. Die Durchgangslöcher ermöglichen eine komfortable und zuverlässige Anbindung eines Lenkgetriebegehäuses an dem Achsträger mittels in die Durchgangslöcher einsteckbaren bzw. eindrehbaren Schrauben.

In diesem Zusammenhang sieht eine weitere Ausgestaltung der Erfindung vor, dass die Durchgangslöcher in der Halterung, deren mindestens eine Vertiefung zur Aufnahme eines der Positionierungsvorsprünge einen geraden Innenkonturabschnitt aufweist, der einen mittleren Abschnitt der Innenkontur der Vertiefung darstellt, als Langlöcher ausgeführt sind, wobei die Längsachse der Langlöcher im Wesentlichen parallel zu dem geraden Innenkonturabschnitt der Vertiefung verläuft. Diese Ausgestaltung lässt gewisse Toleranzen in der fluchtenden Ausrichtung der Durchgangslöcher in der Halterung relativ zu den diesen Durchgangslöchern zugeordneten Durchgangslöchern oder Gewindelöchern im oder am Lenkgetriebegehäuse zu.

Eine weitere Ausgestaltung der Erfindung ist dadurch gekennzeichnet, dass zumindest eines der Durchgangslöcher in der Halterung mit einem Innengewinde oder einer mit der Halterung stoffschlüssig und/oder formschlüssig verbundenen Mutter versehen ist. Hierdurch lässt sich eine sehr einfache sowie komfortable Anbindung eines Lenkgetriebegehäuses an dem Achsträger realisieren. Die mit der Halterung stoffschlüssig und/oder formschlüssig verbundene Mutter kann dabei beispielsweise als Standardmutter, Stanzmutter oder Schweißmutter ausgeführt sein.

Nach einer weiteren vorteilhaften Ausgestaltung der Erfindung sind die Halterungen aus Blechformteilen gebildet. Derart ausgeführte Halterungen zeichnen sich durch eine sehr gute Anbindungsfähigkeit an den Achsträger aus, was insbesondere bei einer komplex geformten Anbindungsfläche des Achsträgers von Vorteil ist. Zudem lassen sich solche Halterungen mit geringem Bauteilgewicht kostengünstig herstellen. Vorzugsweise ist jede der Halterungen aus mindestens zwei Blechformteilen gebildet oder weist mindestens zwei Stege auf, wobei die Blechformteile oder Stege mindestens zwei der Durchgangslöcher als miteinander fluchtende Durchgangslöcher aufweisen.

Die Halterungen zur Anbindung des Lenkgetriebes an dem erfindungsgemäßen Achsträger können auch als Konsolen bezeichnet werden bzw. als solche ausgeführt sein.

Eine weitere vorteilhafte Ausgestaltung der Erfindung sieht vor, dass mindestens eine der Halterungen, welche die Vertiefungen zur Aufnahme der Positionierungsvorsprünge aufweist, mindestens zwei Paare von Durchgangslöchern als Anbindungsstellen zum Anbinden des Lenkgetriebegehäuses aufweist. Hierdurch lässt sich eine besonders stabile Anbindung des Lenkgetriebegehäuses an dem Achsträger erzielen. Vorzugsweise sind die mindestens zwei Paare von Durchgangslöchern zueinander in y-Richtung (Kraftfahrzeugquerrichtung) und/oder in z-Richtung (Kraftfahrzeughochrichtung) versetzt angeordnet.

Der erfindungsgemäße Achsträger kann nach einer weiteren Ausgestaltung der Erfindung mit einem bzw. dem Lenkgetriebegehäuse ausgerüstet sein, das mit Positionierungsvorsprüngen versehen ist, die in den Vertiefungen aufgenommen sind. Die Positionierungsvorsprünge sind nach einer bevorzugten Ausgestaltung der Erfindung zapfenförmig, beispielsweise im Wesentlichen kreiszylindrisch ausgeführt.

Für eine stabile Positionierung des Lenkgetriebes an dem Achsträger ist es vorteilhaft, wenn gemäß einer weiteren Ausgestaltung der Erfindung das Lenkgetriebegehäuse mit mindestens zwei Paaren von Positionierungsvorsprüngen versehen ist, wobei die Positionierungsvorsprünge des jeweiligen Paares in entgegengesetzte Richtungen von dem Lenkgetriebegehäuse vorstehen.

Nachfolgend wird die Erfindung anhand einer mehrere Ausführungsbeispiele darstellenden Zeichnung näher erläutert. Es zeigen:
- Fig. 1: einen erfindungsgemäßen Achsträger mit einem Lenkgetriebe in einer perspektivischen Darstellung;
- Fig. 2A: eine vergrößerte perspektivische Darstellung des Details IIA aus Fig. 1;
- Fig. 2B: einen Abschnitt des Achsträgers aus Fig. 1 mit dem Detail IIA in Draufsicht;
- Fig. 2C: eine vergrößerte perspektivische Darstellung des Details IIC aus Fig. 1;
- Fig. 2D: einen Abschnitt des Achsträgers aus Fig. 1 mit dem Detail IIC in Draufsicht;
- Fig. 3: einen weiteren erfindungsgemäßen Achsträger in Form eines Hilfsrahmens mit einem Lenkgetriebe in einer perspektivischen Darstellung;
- Fig. 4A: eine vergrößerte perspektivische Darstellung des Details IVA aus Fig. 3;

- Fig. 4B: einen Abschnitt des Achsträgers aus Fig. 3 mit dem Detail IVA in Draufsicht;
- Fig. 4C: eine vergrößerte perspektivische Darstellung des Details IVC aus Fig. 3; und
- Fig. 4D: einen Abschnitt des Achsträgers aus Fig. 3 mit dem Detail IVC in Draufsicht.

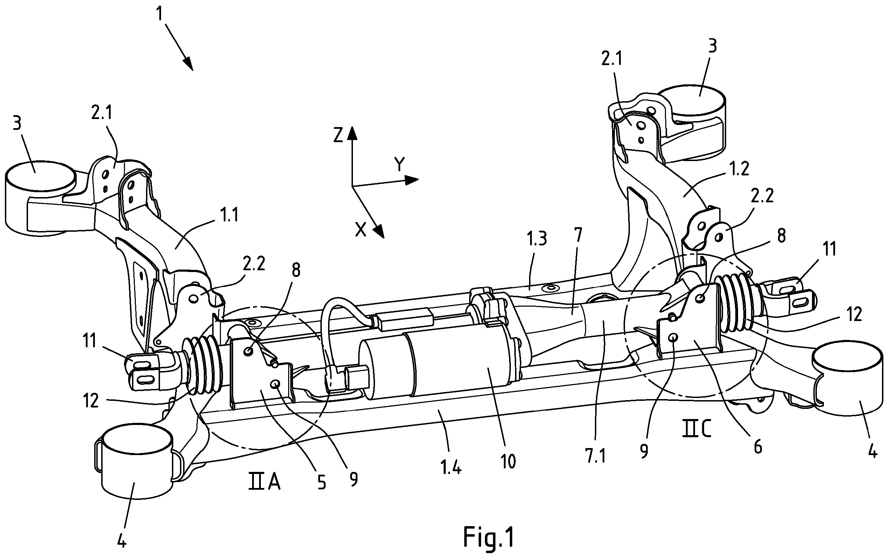

Fig. 1 zeigt einen Achsträger 1 für ein Kraftfahrzeug. Der Achsträger 1 weist voneinander beabstandete Längsträger 1.1, 1.2 auf, die sich im fertig montierten Zustand des Achsträgers 1 im Wesentlichen in Längsrichtung (x-Richtung) des Kraftfahrzeuges erstrecken. Die Längsträger 1.1, 1.2 sind miteinander durch Querträger 1.3, 1.4verbunden, die voneinander in Kraftfahrzeuglängsrichtung beabstandet sind. An den Längsträgern 1.1, 1.2 sind Konsolen 2.1, 2.2 befestigt, vorzugsweise angeschweißt, die der gelenkigen Anbindung von (hier nicht gezeigten) Fahrwerksbauteilen (Querlenkern) dienen. Der Achsträger 1 weist vordere und hintere Anbindungsstellen 3, 4 auf, an denen er mittels mehrerer Verschraubungen an einer Fahrzeugkarosserie befestigt werden kann.

Des Weiteren ist der Achsträger 1 mit Halterungen 5, 6 zum Anbinden eines Lenkgetriebes 7 versehen. Die Halterungen 5, 6 sind vorzugsweise aus Blechformteilen 5.1, 5.2, 6.1, 6.2 gebildet, die mit dem Achsträger 1 fest verbunden, beispielsweise verschweißt sind. Die Halterungen 5, 6 bzw. Blechformteilen 5.1, 5.2, 6.1, 6.2, die auch als Konsolen bezeichnet werden können, sind vorzugsweise aus Stahlblech gefertigt und beispielsweise nahe den Längsträgern 1.1, 1.2 mit den Enden des Querträgers 1.4 verbunden. Bei dem in Fig. 1 bis Fig. 2D gezeigten Ausführungsbeispiel ist die jeweilige Halterung (Konsole) 5, 6 aus zwei Blechformteilen 5.1, 5.2, 6.1, 6.2 gebildet oder weist zwei Stege auf, wobei die Stege oder Blechformteile 5.1, 5.2, 6.1, 6.2 Durchgangslöcher 8, 9 zum Anbinden des Lenkgetriebegehäuses 7.1 aufweisen.

Bei dem Lenkgetriebe 7 handelt es sich beispielsweise um ein Lenkgetriebe einer Servolenkung. An dem Lenkgetriebegehäuse 7.1 ist in diesem Fall ein Elektromotor oder elektrohydraulisches Motor-Pumpen-Aggregat 10 angebracht, mittels dem die vom Fahrer aufgebrachte Lenkkraft verstärkt wird. In dem rohrförmigen Lenkgetriebegehäuse 7.1 ist eine Zahnstange oder Kolbenstange angeordnet, die mittels des Elektromotors oder Motor-Pumpen-Aggregats 10 angetrieben wird und an deren Enden Gelenkteile 11 zur Anbindung von Spurstangen montiert sind. Zwischen den gabelförmigen Gelenkteilen 11 und dem Lenkgetriebegehäuse 7.1 sind Faltenbalge 12 angeordnet, die jeweils mit einem der beiden Gelenkteile 11 und dem Lenkgetriebegehäuse 7.1 verbunden sind.

Das Lenkgetriebegehäuse 7.1 ist mit Anbindungsstellen 7.2, 7.3 zur formschlüssigen Aufnahme von Schraubbolzen (nicht gezeigt) versehen. Die Anbindungsstellen 7.2, 7.3 sind beispielsweise in Form von Lageraugen oder Lagerhülsen ausgebildet und mit dem Lenkgetriebegehäuse 7.1 stoffschlüssig verbunden. Vorzugsweise sind diese Anbindungsstellen 7.2, 7.3 an der Unterseite und an der Oberseite des Lenkgetriebegehäuses 7.1 angeordnet. Die Anbindungsstellen 7.2, 7.3 sind dabei an dem jeweiligen Ende des Lenkgetriebegehäuses 7.1 vorzugsweise in Gehäuselängsrichtung versetzt zueinander angeordnet, wobei beispielsweise die an der Gehäuseoberseite angeordneten Anbindungsstellen 7.2 weiter voneinander beabstandet sind als die an der Gehäuseunterseite angeordneten Anbindungsstellen 7.3.

Die dem Lenkgetriebe 7 zugeordneten Halterungen 5, 6 weisen bei dem in den Fig. 1 bis Fig. 2D gezeigten Ausführungsbeispiel des Achsträgers 1 jeweils zwei Paare von miteinander fluchtenden Durchgangslöchern 8, 9 zum Anbinden des Lenkgetriebegehäuses 7.1 auf. In die Durchgangslöcher 8, 9 einsteckbare Schraubbolzen werden mit Muttern (nicht gezeigt), beispielsweise mit Standardmuttern fixiert. Es liegt jedoch auch im Rahmen der Erfindung, dass zumindest eines der Durchgangslöcher 8, 9 in der jeweiligen Halterung 5, 6 mit einem Innengewinde oder mit einer mit der Halterung 5, 6 stoffschlüssig und/oder formschlüssig verbundenen Mutter versehen ist.

Des Weiteren umfasst der Achsträger 1 eine Vorrichtung zum Positionieren des Lenkgetriebegehäuses 7.1 am Achsträger, mittels der das Lenkgetriebegehäuse 7.1 vor seiner Montage passgenau am Achsträger positioniert werden kann, so dass das Lenkgetriebegehäuse 7.1 anschließend auf einfache Weise und somit komfortabel am Achsträger 1 befestigt werden kann. Die Vorrichtung zum Positionieren des Lenkgetriebegehäuses 7.1 ist in den Halterungen (Konsolen) 5, 6 integriert.

Der Abstand zwischen den Stegen oder Blechformteilen 5.1, 5.2 bzw. 6.1, 6.2 der jeweiligen Halterung 5, 6 ist so gewählt bzw. bemessen, dass die Anbindungsstellen 7.2, 7.3 des Lenkgetriebegehäuses 7.1, die beispielsweise in Form von Lageraugen oder Lagerhülsen ausgebildet sind, mit sehr geringem Spiel in x-Richtung (Kraftfahrzeuglängsrichtung), relativ zu den Stegen oder Blechformteilen 5.1, 5.2, 6.1, 6.2, in die Halterungen 5, 6 eingesetzt werden können. Die jeweilige Halterung 5, 6 weist dabei mindestens zwei Vertiefungen 5.3, 5.4, 6.3, 6.4 zur Aufnahme von an dem Lenkgetriebegehäuse 7.1 vorgesehenen Positionierungsvorsprüngen 7.4, 7.5 auf. Die Vertiefungen 5.3, 5.4, 6.3, 6.4 sind in nach oben weisenden Kanten 5.11, 5.21, 6.11, 6.21 der Halterungen 5, 6 ausgebildet.

Das Lenkgetriebegehäuse 7.1 ist beispielsweise mit zwei Paaren von Positionierungsvorsprüngen 7.4, 7.5 versehen, wobei die Positionierungsvorsprünge 7.4, 7.5 des jeweiligen Paares in entgegengesetzte Richtungen von dem Lenkgetriebegehäuses 7.1 vorstehen. Die Positionierungsvorsprünge 7.4, 7.5 sind vorzugsweise zapfenförmig, beispielsweise im Wesentlichen kreiszylindrisch ausgeführt.

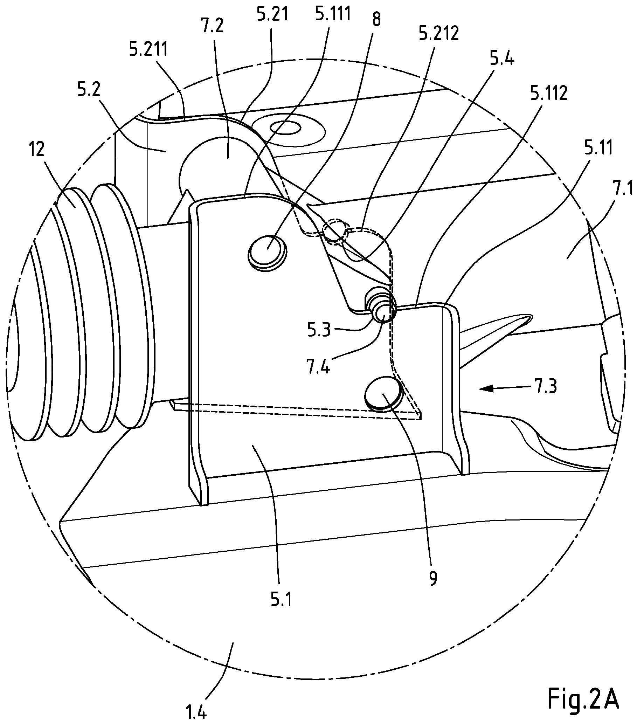

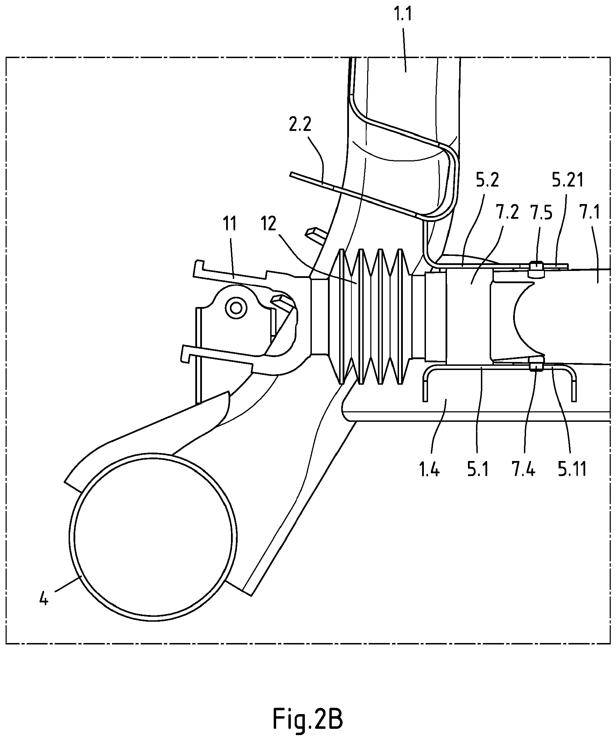

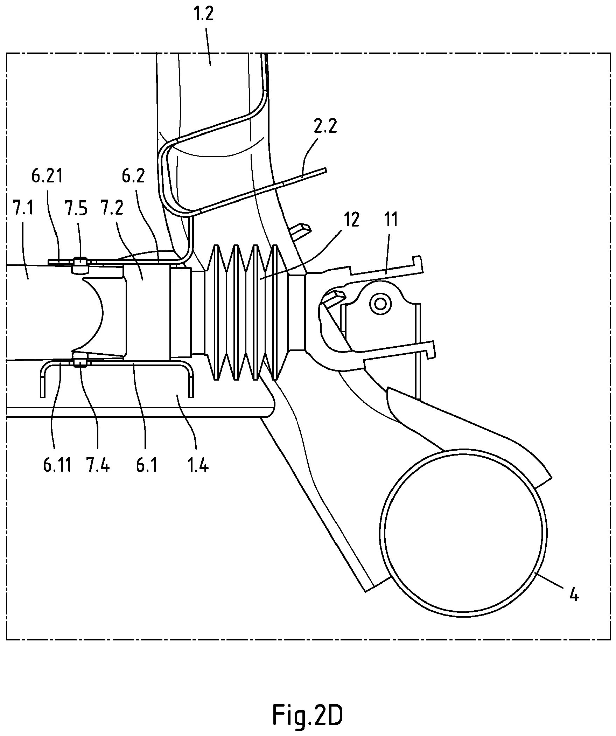

Die an einer der Halterungen, zum Beispiel der Halterung 5 ausgebildeten Vertiefungen 5.3, 5.4 zur Aufnahme der Positionierungsvorsprünge 7.4, 7.5 weisen eine konkave oder kreisbogenförmige Innenkontur auf (vgl. Fig. 2A). Diese Vertiefungen 5.3, 5.4 sind so ausgebildet und bemessen, dass die ihnen zugeordneten Positionierungsvorsprünge 7.4, 7.5 in sie spielfrei oder nahezu spielfrei einsetzbar sind. Beispielsweise kann der Radius der kreisbogenförmigen Innenkontur im Wesentlichen dem Radius des Außendurchmessers des zugeordneten kreiszylindrischen Positionierungsvorsprungs 7.4, 7.5 entsprechen oder geringfügig größer als der letztgenannte Radius sein.

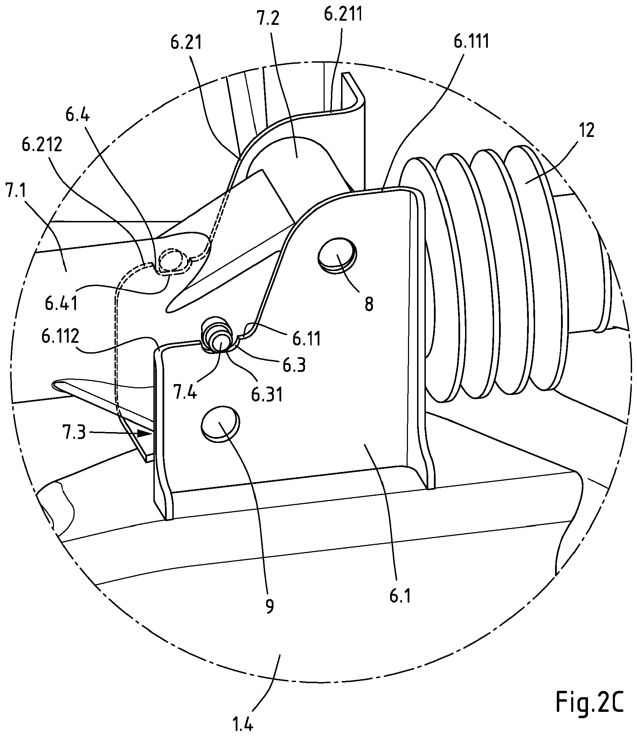

Dagegen weisen die an der anderen Halterung, zum Beispiel der Halterung 6 ausgebildeten Vertiefungen 6.3, 6.4 zur Aufnahme der Positionierungsvorsprünge 7.4, 7.5 vorzugsweise jeweils einen geraden Innenkonturabschnitt 6.31, 6.41 auf, der einen mittleren Abschnitt der Innenkontur der betreffenden Vertiefung 6.3, 6.4 darstellt (vgl. Fig. 2C). Der gerade Innenkonturabschnitt 6.31, 6.41 geht beispielsweise in konkave oder bogenförmige, z. B. kreisbogenförmige Innenkonturabschnitte über. Diese Vertiefungen 6.3, 6.4 sind so ausgebildet und bemessen, dass die ihnen zugeordneten Positionierungsvorsprünge 7.4, 7.5 in diese mit Spiel in y-Richtung (Kraftfahrzeugquerrichtung) einsetzbar sind. Das Spiel gestattet Fertigungstoleranzen im Abstand der Vertiefungen 5.3, 5.4 relativ zu den Vertiefungen 6.3, 6.4 bzw. der Positionierungsvorsprünge 7.4, 7.5 in y-Richtung.

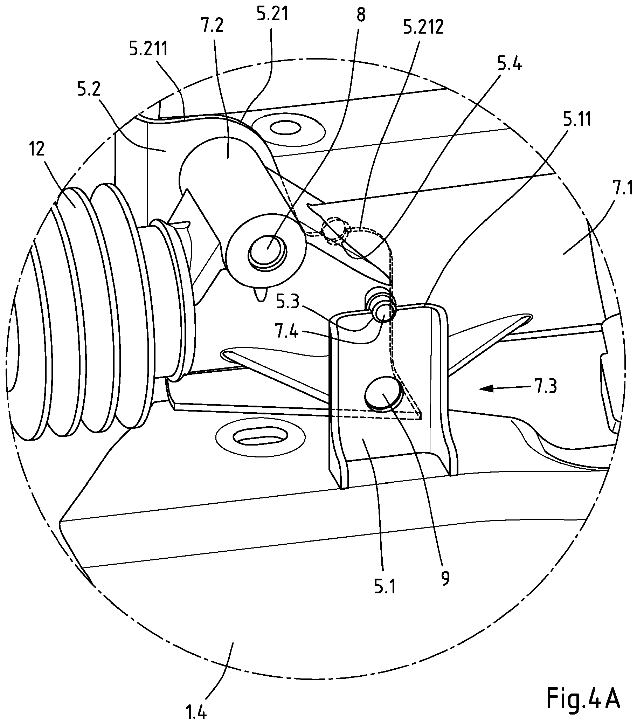

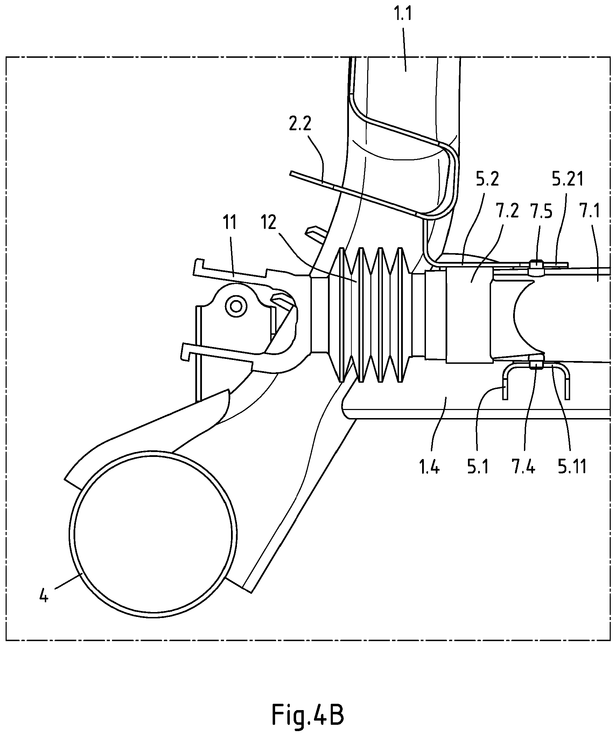

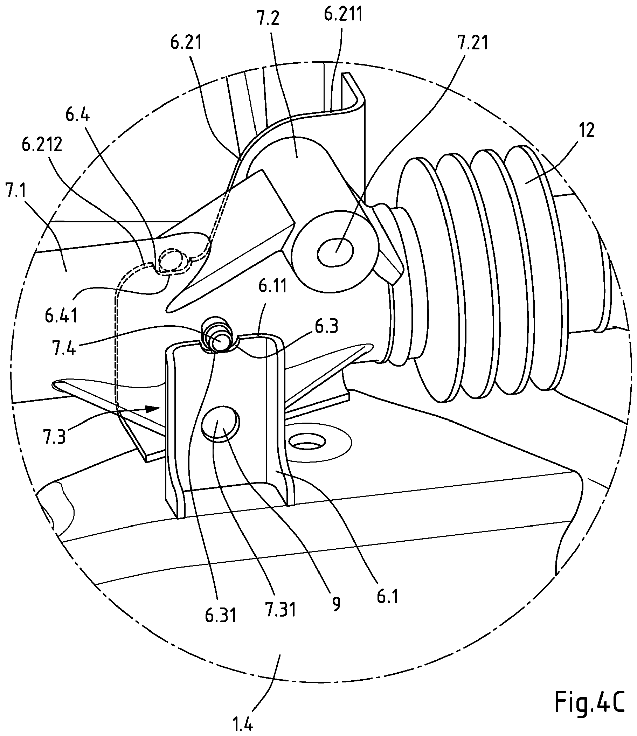

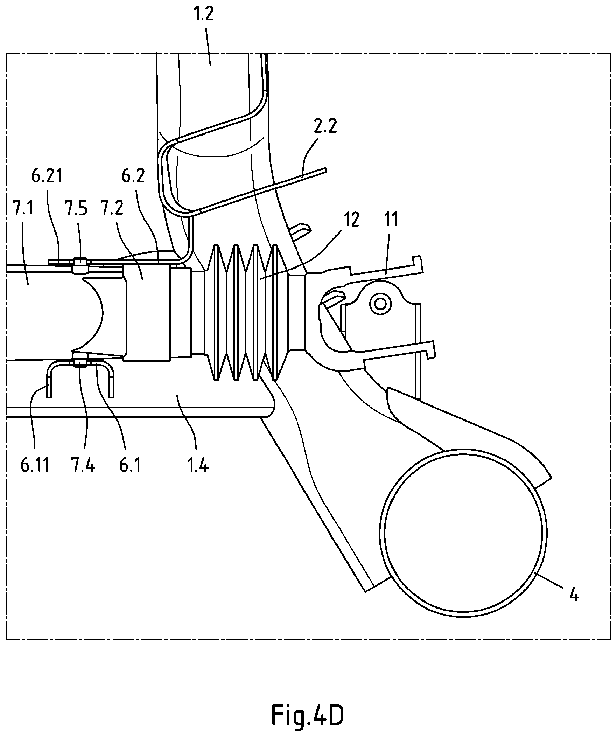

Die Durchgangslöcher 8, 9 in der Halterung 6, deren Vertiefungen 6.3, 6.4 jeweils einen geraden Innenkonturabschnitt 6.31, 6.41 aufweisen, welcher einen mittleren Abschnitt der Innenkontur der betreffenden Vertiefung 6.3, 6.4 darstellt, sind als Langlöcher ausgeführt. Die Längsachse des jeweiligen Langlochs 8, 9 verläuft dabei im Wesentlichen parallel zu dem geraden Innenkonturabschnitt 6.31, 6.41 der zu dem Langloch 8, 9 benachbarten Vertiefung 6.3, 6.4. Alternativ oder zusätzlich können auch die in den Anbindungsstellen 7.2, 7.3 des Lenkgetriebegehäuses 7.1 angeordneten Durchgangslöcher 7.21, 7.31 als Langlöcher ausgebildet sein (vgl. Fig. 4C).

Des Weiteren sind die Stege oder Blechformteile 5.1, 5.2, 6.1, 6.2 der jeweiligen Halterung 5, 6 beispielsweise so ausgebildet, dass sie Abschnitte unterschiedlicher Höhe aufweisen. Die Stege oder Blechformteile 5.1, 5.2, 6.1, 6.2 haben somit an ihrer nach oben weisenden Kante 5.11, 5.21, 6.11, 6.21 einen Absatz, der durch einen höheren Kantenabschnitt 5.111, 5.211, 6.111, 6.211 und einen tieferen Kantenabschnitt 5.112, 5.212, 6.112, 6.212 definiert ist. Die Vertiefungen 5.3, 5.4, 6.3, 6.4 zur Aufnahme der Positionierungsvorsprünge 7.4, 7.5 sind dabei vorzugsweise an den tieferen Kantenabschnitten 5.112, 5.212, 6.112, 6.212 angeordnet (vgl. Fig. 1, Fig. 2A, Fig. 2C). Zudem liegen die Vertiefungen 5.3, 5.4, 6.3, 6.4 in Kantenbereichen der Halterungen 5, 6, wobei diese Kantenbereiche von Vertikalen geschnitten werden, welche auch die unteren Durchgangslöcher 9 schneiden. Anders ausgedrückt sind die Vertiefungen vertikal oberhalb den unteren Durchgangslöchern 9 angeordnet (vgl. Fig. 2A und Fig. 2C).

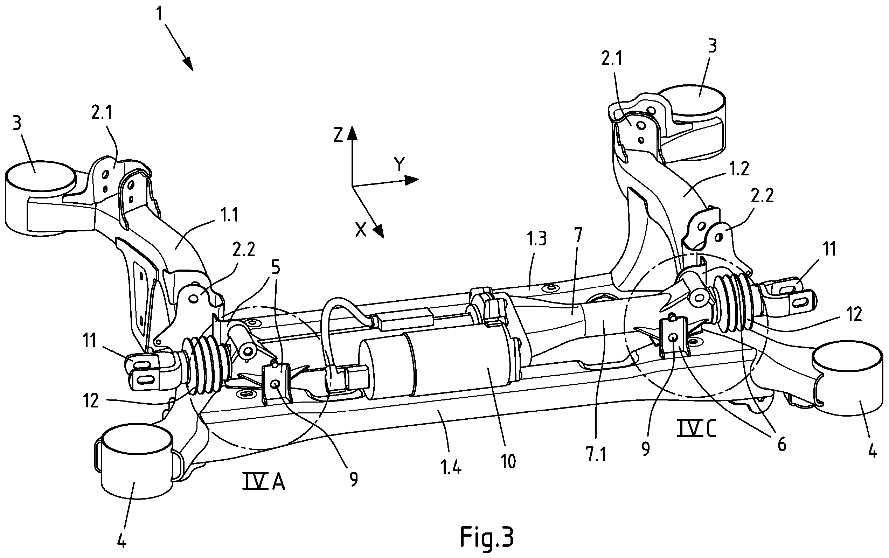

Das in Fig. 3 bis Fig. 4D gezeigte Ausführungsbeispiel der Erfindung unterscheidet sich von dem in Fig. 1 bis Fig. 2D gezeigten Ausführungsbeispiel lediglich in der Ausführung der Halterungen (Konsolen) 5, 6. Die jeweilige Halterung 5, 6 ist auch hier wieder aus zwei Blechformteilen 5.1, 5.2, 6.1, 6.2 gebildet oder weist zwei Stege auf, wobei die Stege oder Blechformteile 5.1, 5.2, 6.1, 6.2 Durchgangslöcher 9 zum Anbinden des Lenkgetriebegehäuses 7.1 aufweisen. Jedoch hat die jeweilige Halterung 5, 6 nur zwei miteinander fluchtende Durchgangslöcher 9 zum Einstecken bzw. Eindrehen eines Schraubbolzens. Der eine Steg bzw. das eine Blechformteil 5.1, 6.1 der Halterung 5, 6 ist entlang seiner oberen Kante mit im Wesentlichen gleichbleibender Höhe ausgebildet, während das andere Blechformteil 5.2, 6.2 der Halterung 5, 6 (wie bei dem in Fig. 1 bis Fig. 2D gezeugten Ausführungsbeispiel) Abschnitte unterschiedlicher Höhe aufweist. Das heißt, dieses Blechformteil 5.2, 6.2 hat an seiner nach oben weisenden Kante 5.21, 6.21 ebenfalls einen Absatz, der durch einen höheren Kantenabschnitt 5.211, 6.211 und einen tieferen Kantenabschnitt 5.212, 6.212 definiert ist. Zudem hat dieses Blechformteil 5.2, 6.2 ein zweites bzw. oberes Durchgangsloch 8 zur Anbindung des Lenkgetriebegehäuses 7.1. Die diesem Durchgangsloch 8 zugeordnete Anbindungsstelle 7.2 des Lenkgetriebegehäuses 7.1, die z.B. in Form einer Lagerhülse ausgeführt ist, kann ein Langloch zum Einstecken eines Schraubbolzens (nicht gezeigt) oder ein Innengewinde zum Eindrehen eines Schraubbolzens (nicht gezeigt) aufweisen.

Die Ausführung der Erfindung ist nicht auf die in der Zeichnung dargestellten Ausführungsbeispiele beschränkt. Vielmehr sind zahlreiche Varianten denkbar, die auch bei einer von den gezeigten Beispielen abweichenden Gestaltung von der in den Ansprüchen angegebenen Erfindung Gebrauch machen. So können beispielsweise die Halterungen 5, 6 des Lenkgetriebes 7 auch nur mit den Längsträgern 1.1, 1.2 oder sowohl mit dem Querträger 1.4 und den Längsträgern 1.1, 1.2 verbunden sein. Des Weiteren könnten die Vertiefungen 5.3, 5.4 zur formschlüssigen Aufnahme der Positionierungsvorsprünge 7.4, 7.5 anstelle einer konkaven oder kreisbogenförmigen Innenkontur auch eine V-förmige Innenkontur aufweisen.

## Patentansprüche

1. Achsträger (1) für ein Kraftfahrzeug, mit
mindestens zwei Längsträgern (1.1, 1.2),
mindestens einem die Längsträger miteinander verbindenden Querträger (1.4), mindestens zwei Anbindungsstellen zum Anbinden eines Lenkgetriebegehäuses (7.1) an dem Achsträger (1) und
einer Vorrichtung zum Positionieren des Lenkgetriebegehäuses (7.1) an dem Achsträger (1) vor einer Montage des Lenkgetriebegehäuses (7.1) an dem Achsträger (1),
**dadurch gekennzeichnet, dass** die Vorrichtung zum Positionieren des Lenkgetriebegehäuses (7.1) mindestens zwei Halterungen (5, 6) aufweist, von denen eine Halterung (5) mit einem der Längsträger (1.1, 1.2) und/oder dem Querträger (1.4) verbunden ist und eine andere (6) der Halterungen (5, 6) mit einem anderen der Längsträger (1.1, 1.2) und/oder dem Querträger (1.4) verbunden ist, wobei die jeweilige Halterung (5, 6) mindestens zwei Vertiefungen (5.3, 5.4, 6.3, 6.4) zur Aufnahme von an dem Lenkgetriebegehäuse (7.1) vorgesehenen Positionierungsvorsprüngen (7.4, 7.5) aufweist.

2. Achsträger nach Anspruch 1,
**dadurch gekennzeichnet, dass** die Anbindungsstellen zum Anbinden des Lenkgetriebegehäuses (7.1) in den die Vertiefungen (5.3, 5.4, 6.3, 6.4) zur Aufnahme der Positionierungsvorsprünge aufweisenden Halterungen (5, 6) angeordnet sind.

3. Achsträger nach Anspruch 1 oder 2,
**dadurch gekennzeichnet, dass** mindestens eine der Vertiefungen (5.3, 5.4) zur Aufnahme eines der Positionierungsvorsprünge (7.4, 7.5) eine V-förmige, konkave oder kreisbogenförmige Innenkontur aufweist.

4. Achsträger nach einem der Ansprüche 1 bis 3,
**dadurch gekennzeichnet, dass** mindestens eine der Vertiefungen (6.3, 6.4) zur Aufnahme eines der Positionierungsvorsprünge (7.4, 7.5) einen geraden Innenkonturabschnitt (6.31, 6.41) aufweist, der einen mittleren Abschnitt der Innenkontur der Vertiefung (6.3, 6.4) darstellt.

5. Achsträger nach einem der Ansprüche 1 bis 4,
**dadurch gekennzeichnet, dass** die Anbindungsstellen zum Anbinden des Lenkgetriebegehäuses (7.1) als Durchgangslöcher (8, 9) in den die Vertiefungen (5.3, 5.4, 6.3, 6.4) zur Aufnahme der Positionierungsvorsprünge (7.4, 7.5) aufweisenden Halterungen, (5, 6) ausgeführt sind.

6. Achsträger nach den Ansprüchen 4 und 5,
**dadurch gekennzeichnet, dass** die Durchgangslöcher (8, 9) in der Halterung (6), deren mindestens eine Vertiefung (6.3, 6.4) zur Aufnahme eines der Positionierungsvorsprünge (7.4, 7.5) einen geraden Innenkonturabschnitt (6.31, 6.41) aufweist, der einen mittleren Abschnitt der Innenkontur der Vertiefung darstellt, als Langlöcher ausgeführt sind, wobei die Längsachse der Langlöcher im Wesentlichen parallel zu dem geraden Innenkonturabschnitt (6.31, 6.41) der Vertiefung (6.3, 6.4) verläuft.

7. Achsträger nach Anspruch 5 oder 6,
**dadurch gekennzeichnet, dass** zumindest eines der Durchgangslöcher (8, 9) in der Halterung (5, 6) mit einem Innengewinde oder einer mit der Halterung (5, 6) stoffschlüssig und/oder formschlüssig verbundenen Mutter versehen ist.

8. Achsträger nach einem der Ansprüche 1 bis 7,
**dadurch gekennzeichnet, dass** die Halterungen (5, 6) aus Blechformteilen (5.1, 5.2, 6.1, 6.2) gebildet sind.

9. Achsträger nach Anspruch 8 und einem der Ansprüche 5 bis 7,
**dadurch gekennzeichnet, dass** die jeweilige Halterung (5, 6) aus mindestens zwei Blechformteilen (5.1, 5.2, 6.1, 6.2) gebildet ist oder mindestens zwei Stege aufweist, wobei die Blechformteile (5.1, 5.2, 6.1, 6.2) oder Stege mindestens zwei der Durchgangslöcher (8, 9) als miteinander fluchtende Durchgangslöcher (8, 9) aufweisen.

10. Achsträger nach einem der Ansprüche 1 bis 9,
**dadurch gekennzeichnet, dass** die Vertiefungen (5.3, 5.4, 6.3, 6.4) zur Aufnahme der Positionierungsvorsprünge (7.4, 7.5) in nach oben weisenden Kanten ((5.11, 5.21, 6.11, 6.21) der Halterungen (5, 6) ausgebildet sind.

11. Achsträger nach einem der Ansprüche 1 bis 10,
**dadurch gekennzeichnet, dass** mindestens eine der Halterungen (5, 6), welche die Vertiefungen (5.3, 5.4, 6.3, 6.4) zur Aufnahme der Positionierungsvorsprünge (7.4, 7.5) aufweist, mindestens zwei Paare von Durchgangslöchern (8, 9) als Anbindungsstellen zum Anbinden des Lenkgetriebegehäuses (7.1) aufweist.

12. Achsträger (1) nach einem der Ansprüche 1 bis 11, mit einem Lenkgetriebegehäuse, (7.1) das mit Positionierungsvorsprüngen (7.4, 7.5) versehen ist, die in den Vertiefungen aufgenommen sind.

13. Achsträger nach Anspruch 12,
**dadurch gekennzeichnet, dass** die Positionierungsvorsprünge (7.4, 7.5) zapfenförmig ausgeführt sind.

14. Achsträger nach Anspruch 12 oder 13,
**dadurch gekennzeichnet, dass** das Lenkgetriebegehäuse (7.1) mit mindestens zwei Paaren von Positionierungsvorsprüngen (7.4, 7.5) versehen ist, wobei die Positionierungsvorsprünge (7.4, 7.5) des jeweiligen Paares in entgegengesetzte Richtungen von dem Lenkgetriebegehäuses (7.1) vorstehen.

## Claims

1. Axle support (1) for a motor vehicle, having
at least two longitudinal members (1.1, 1.2),
at least one cross member (1.4) joining together the longitudinal members, at least two attachment points for attaching a steering gear housing (7.1) to the axle support (1) and
a device for positioning the steering gear housing (7.1) on the axle support (1) prior to mounting of the steering gear housing (7.1) on the axle support (1), **characterised in that** the device for positioning the steering gear housing (7.1) has at least two mounts (5, 6), one mount (5) of which being attached to one of the longitudinal members (1.1, 1.2) and/or the cross member (1.4) and another mount (6) of the mounts (5,6) being attached to another of the longitudinal members (1.1, 1.2) and/or the cross member (1.4), wherein the respective mount (5, 6) has at least two indentations (5.3, 5.4, 6.3, 6.4) for receiving positioning protrusions provided (7.4, 7.5) provided on the steering gear housing (7.1).

2. Axle support according to claim 1,
**characterised in that** the attachment points for attaching the steering gear housing (7.1) are arranged in the mounts (5, 6) having the indentations (5.3, 5.4, 6.3, 6.4) for receiving the positioning protrusions.

3. Axle support according to claim 1 or claim 2,
**characterised in that** at least one of the indentations (5.3, 5.4) for receiving one of the positioning protrusions (7.4, 7.5) has a V-shaped, concave or arc-shaped inner contour.

4. Axle support according to any one of claims 1 to 3,
**characterised in that** at least one of the indentations (6.3, 6.4) for receiving one of the positioning protrusions (7.4, 7.5) has a straight inner contour section (6.31, 6.41), constituting a middle section of the inner contour of the indentation (6.3, 6.4).

5. Axle support according to any one of claims 1 to 4,
**characterised in that** the attachment points for fastening the steering gear housing (7.1) are implemented as through-holes (8, 9) in the mounts (5, 6) having the indentations (5.3, 5.4, 6.3, 6.4) for receiving the positioning protrusions (7.4, 7.5).

6. Axle support according to claims 4 and 5,
**characterised in that** the through-holes (8, 9) in the mount (6), at least one of the indentations (6.3, 6.4) for receiving one of the positioning protrusions (7.4, 7.5) of which has a straight inner contour section (6.31, 6.41), which constitutes a middle section of the inner contour of the indentation, are implemented as longitudinal holes, wherein the longitudinal axis of the longitudinal holes runs substantially parallel to the straight inner contour section (6.31, 6.41) of the indentation (6.3, 6.4).

7. Axle support according to claim 5 or claim 6,
**characterised in that** at least one of the through-holes (8, 9) is provided in the mount (5, 6) with an internal thread or with a nut having a material bonding connection and/or form-fitting connection with the mount (5, 6).

8. Axle support according to any one of claims 1 to 7,
**characterised in that** the mounts (5, 6) are formed from sheet metal shaped parts (5.1, 5.2, 6.1, 6.2).

9. Axle support according to claim 8 and any one of claims 5 to 7, **characterised in that** the respective mount (5, 6) is formed by at least two sheet metal shaped parts (5.1, 5.2, 6.1, 6.2) or has at least two webs, wherein the sheet metal shaped parts (5.1, 5.2, 6.1, 6.2) or webs have at least two of the through-holes (8, 9) as flush-aligned through-holes (8, 9).

10. Axle support according to any one of claims 1 to 9,
**characterised in that** the indentations (5.3, 5.4, 6.3 6.4) for receiving the positioning protrusions (7.4, 7.5) are configured in upward-pointed edges (5.11, 5.21, 6.11, 6.21) of the mounts (5, 6).

11. Axle support according to any one of claims 1 to 10,
**characterised in that** at least one of the mounts (5, 6), which has the indentations (5.3, 5.4, 6.3, 6.4) for receiving the positioning protrusions (7.4, 7.5), has at least two pairs of through holes (8, 9) as attachment points for fastening the steering gear housing (7.1).

12. Axle support (1) according to any one of claims 1 to 11, having a steering gear housing (7.1) provided with positioning protrusions (7.4, 7.5), received in the indentations.

13. Axle support according to claim 12,
**characterised in that** the positioning protrusions (7.4, 7.5) are peg-shaped.

14. Axle support according to claim 12 or claim 13,
**characterised in that** the steering gear housing (7.1) is provided with at least two pairs of positioning protrusions (7.4, 7.5), wherein the positioning protrusions (7.4, 7.5) of the respective pair protrude in opposing directions from the steering gear housing (7.1).

## Revendications

1. Porte-essieu (1) pour un véhicule à moteur, avec
au moins deux longerons (1.1, 1.2),
au moins une traverse (1.4) reliant les longerons entre eux,
au moins deux emplacements de liaison pour raccorder un boîtier de mécanisme de direction (7.1) au porte-essieu (1) et
un dispositif pour positionner le boîtier de mécanisme de direction (7.1) sur le porte-essieu (1) avant de monter le boîtier de mécanisme direction (7.1) sur le porte-essieu (1),
**caractérisé**
**en ce que** le dispositif pour positionner le boîtier de mécanisme de direction (7.1) comporte au moins deux supports (5, 6), l'un des supports (5) étant relié à l'un des longerons (1.1, 1.2) et/ou à la traverse (1.4) et un l'autre (6) des supports (5, 6) étant relié à un autre des longerons (1.1, 1.2) et / ou à la traverse (1.4), où chaque support (5, 6) comporte au moins deux évidements (5.3, 5.4, 6.3, 6.4) pour accueillir des saillies de positionnement (7.4, 7.5) prévues sur le boîtier de mécanisme de direction (7.1).

2. Porte-essieu selon la revendication 1,
**caractérisé en ce que** les emplacements de liaison pour raccorder le boîtier de mécanisme de direction (7.1) sont positionnés dans les supports (5; 6) comportant les évidements (5.3, 5.4, 6.3, 6.4) pour accueillir les saillies de positionnement.

3. Porte-essieu selon la revendication 1 ou 2,
**caractérisé en ce qu'**au moins un des évidements (5.3, 5.4) pour accueillir une des saillies de positionnement (7.4, 7.5) présente un contour intérieur en forme de V, concave ou en forme d'arc de cercle.

4. Porte-essieu selon l'une des revendications 1 à 3,
**caractérisé en ce qu'**au moins un des évidements (5.3, 5.4) pour accueillir une des saillies de positionnement (7.4, 7.5) présente une section de contour intérieur droite (6.31, 6.41), laquelle section forme une section centrale du contour intérieur de l'évidement (6.3, 6.4).

5. Porte-essieu selon l'une des revendications 1 à 4,
**caractérisé en ce que** les emplacements de liaison pour raccorder le boîtier de mécanisme de direction (7.1) sont produits sous forme de trous traversants (8, 9) dans les supports (5, 6) comportant les évidements (5.3, 5.4, 6.3, 6.4) pour accueillir les saillies de positionnement (7.4, 7.5).

6. Porte-essieu selon les revendications 4 et 5,
**caractérisé en ce que** les trous traversants (8, 9) dans le support (6), dont au moins un évidement (6.3, 6.4) pour accueillir une des saillies de positionnement (7.4, 7.5) présente une section de contour intérieur droite (6.31, 6.41), laquelle section forme une section centrale du contour intérieur de l'évidement, sont conçus comme des trous allongés, où l'axe longitudinal des trous allongés est essentiellement parallèle à la section droite du contour intérieur (6.31, 6.41) de l'évidement (6.3, 6.4).

7. Porte-essieu selon la revendication 5 ou 6,
**caractérisé en ce qu'**au moins un des trous traversants (8, 9) dans le support (5, 6) est pourvu d'un filetage interne ou d'un écrou relié au support (5, 6) par une connexion de matériau et / ou de forme.

8. Porte-essieu selon l'une des revendications 1 à 7,
**caractérisé en ce que** les supports (5, 6) sont constitués de pièces façonnées en tôle (5.1, 5.2, 6.1, 6.2).

9. Porte-essieu selon la revendication 8 et l'une des revendications 5 à 7,
**caractérisé en ce que** le support respectif (5, 6) est constitué d'au moins deux pièces façonnées en tôle (5.1, 5.2, 6.1, 6.2) ou comporte au moins deux âmes, où les pièces façonnées en tôle (5.1, 5.2, 6.1, 6.2) ou l'âmes présentent au moins deux des trous traversants (8, 9) comme trous traversants (8, 9) ayant leurs axes alignés l'un avec l'autre.

10. Porte-essieu selon l'une des revendications 1 à 9,
**caractérisé en ce que** les évidements (5.3, 5.4, 6.3, 6.4) pour accueillir les saillies de positionnement (7.4, 7.5) sont formés dans les bords orientés vers le haut (5.11, 5.21, 6.11, 6.21) des supports (5, 6).

11. Porte-essieu selon l'une des revendications 1 à 10,
**caractérisé en ce qu'**au moins un des supports (5, 6), qui comporte le évidements (5.3, 5.4) pour accueillir une des saillies de positionnement (7.4, 7.5), présente au moins deux paires de trous traversants (8, 9) comme emplacements de liaison pour raccorder le boîtier de mécanisme de direction (7.1).

12. Porte-essieu (1) selon l'une des revendications 1 à 11, avec un boîtier de mécanisme de direction (7.1), qui est pourvu de saillies de positionnement (7.4, 7.5), lesquelles saillies sont accueillies dans les évidements.

13. Porte-essieu selon la revendication 12,
**caractérisé en ce que** les saillies de positionnement (7.4, 7.5) sont conçues sous forme de tenons.

14. Porte-essieu selon la revendication 12 ou 13,
**caractérisé en ce que** le boîtier de mécanisme de direction (7.1) est pourvu d'au moins deux paires de saillies de positionnement (7.4, 7.5), où les saillies de positionnement (7.4, 7.5) de la paire respective saillent du boîtier de mécanisme de direction dans des directions opposées.
